(19) Europäisches Patentamt

European Patent Office

Office européen des brevets

(11) EP 0 418 084 B1

(12) EUROPEAN PATENT SPECIFICATION

(45) Date of publication and mention
of the grant of the patent:
**28.02.1996 Bulletin 1996/09**

(51) Int Cl.[6]: **G02F 1/33**, H04N 5/74

(21) Application number: **90310043.6**

(22) Date of filing: **13.09.1990**

(54) **Laser beam deflection apparatus**

Laserstrahl-Ablenkungsvorrichtung

Dispositif de déflexion d'un faisceau laser

(84) Designated Contracting States:
**DE FR GB NL**

(30) Priority: **14.09.1989 JP 238738/89**

(43) Date of publication of application:
**20.03.1991 Bulletin 1991/12**

(73) Proprietor: **SONY CORPORATION**
**Tokyo 141 (JP)**

(72) Inventors:
• **Tamada, Sakuya, c/o Patents Division**
**Shinagawa-ku, Tokyo 141 (JP)**
• **Nakane, Yasuaki, c/o Patents Division**
**Shinagawa-ku, Tokyo 141 (JP)**

(74) Representative: **Cotter, Ivan John et al**
**London EC4A 1DA (GB)**

(56) References cited:
**US-A- 4 213 146**

• **PATENT ABSTRACTS OF JAPAN, vol. 10, no. 268 (E-436) 12 September 1986 & JP-A-61 090 584**
• **OPTICAL ENGINEERING, vol. 20, no. 1, January 1981, Bellingham, US, pp. 143-149; L. BADEMIAN: "Acousto-optic laser recording"**

## Description

This invention relates to laser beam deflection apparatus.

A known laser scanning apparatus displays, for example, a television picture by raster-scanning an intensity modulated laser beam in horizontal and vertical directions in a two-dimensional manner.

It has been proposed that this laser scanning apparatus should include a mechanical laser beam scanning system that employs a rotary polygonal mirror for horizontal scanning. The mechanical laser beam scanning system using the rotary polygonal mirror has the following unavoidable shortcomings:

(i) vibration occurs due to shaft whirl of a motor which rotates the rotary polygonal mirror;
(ii) noise is produced due to sound emanated by the rotation of the rotary polygonal mirror;
(iii) durability of a bearing of the rotary polygonal mirror presents a problem;
(iv) since rotation of the rotary drive motor cannot be started readily, the mechanical laser beam scanning system cannot be started quickly; and
(v) since the rotation of the rotary drive motor is not precisely stabilised, jitter occurs in the displayed image.

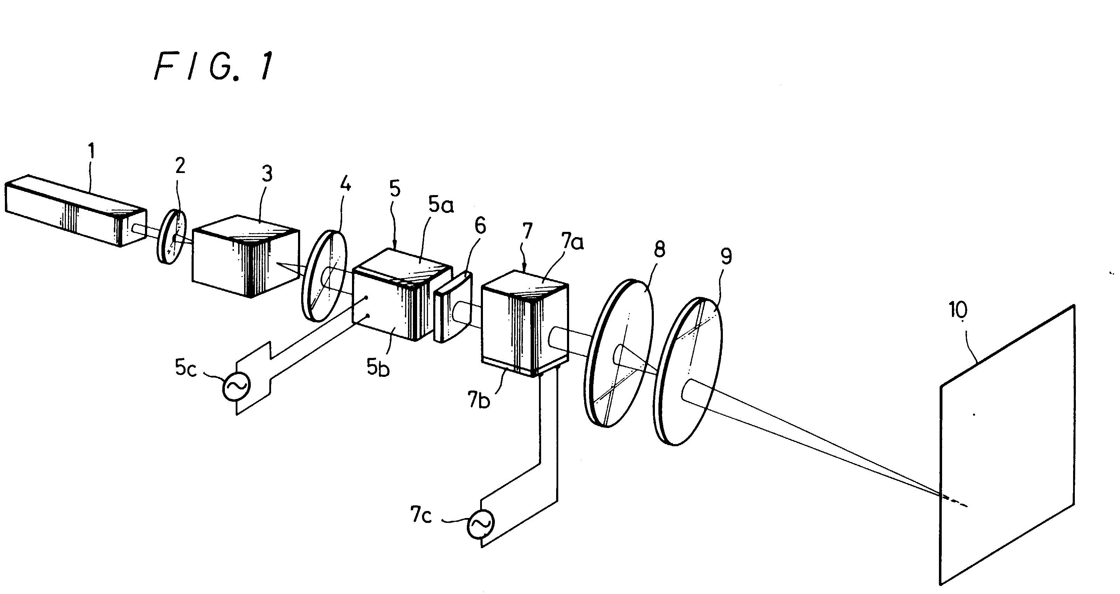

Figure 1 of the accompanying drawings is a schematic diagram showing an example of a previously proposed raster-scanning type laser display apparatus which uses acousto-optic deflectors for both horizontal and vertical scanning. The apparatus is described in "Raster-Scanned Laser Display System Using Two - Dimensional Te $O_2$ Acoustooptic Light Deflector", A. Fukumoto et al., Deuski Tsunshin Gakukdi Roubushi, 75/4, Vol. 58-c, No. 4, pages 209 - 216.

Referring to Figure 1, a laser beam emitted from a laser light source 1 is converged into a small spot size by a laser beam focussing lens 2 and is fed to a known type of acousto-optic light intensity modulator 3. The modulator 3 changes the intensity of a supersonic wave applied to an acousto-optic medium and thereby changes the efficiency with which a laser beam is deflected by the supersonic wave to thereby modulate the light intensity of the deflected laser beam.

A video signal (not shown) is supplied to the acousto-optic light intensity modulator 3, whereby the laser beam is intensity-modulated in response to the video signal. The thus intensity-modulated laser beam emitted from the modulator 3 is supplied to a collimator lens 4, in which it is collimated to provide a laser beam of predetermined diameter. This laser beam is then fed to a horizontal scanning acousto-optic deflector 5.

The acousto-optic deflector 5 comprises an acousto-optic medium 5a and a supersonic wave generator 5b attached to one surface of the acousto-optic medium 5a. The supersonic wave generator 5b effectively utilises the piezoelectric effect. When a voltage is applied to the supersonic wave generator 5b from a high frequency generator 5c, a progressive wave of supersonic vibration is generated in the acousto-optic medium 5a. If the oscillation frequency of the high frequency oscillator 5c is low the acousto-optic medium 5a generates a progressive wave of long wavelength, whereas if the oscillation frequency of the high frequency oscillator 5c is high the acousto-optic medium 5a generates a progressive wave of short wavelength.

The laser beam supplied to the acousto-optic deflector 5 is introduced into the acousto-optic medium 5a, in which it encounters the progressive wave of supersonic vibration, is diffracted and then deflected by this progressive wave. At that time, the shorter the wavelength of the progressive wave of the supersonic vibration, the more the laser beam is deflected. Therefore, if the oscillation frequency of the high frequency oscillator 5c is repeatedly swept from a low frequency to a high frequency in a sawtooth wave fashion, the laser beam emitted from the acousto-optic deflector 5 is deflected to provide a horizontal scanning laser beam which repeats the deflection scanning.

In order to project an image of high resolution on a screen, it is necessary to increase the diameter of the laser beam incident on the acousto-optic deflector 5. Nevertheless, although the diameter of the laser beam is large, the transmission speed of the progressive wave of supersonic vibration in the acousto-optic medium 5a is finite so that the frequency of the supersonic wave which encounters the laser beam is different in the incident laser beam at the portion near to, as opposed to the portion distant from, the supersonic wave generator 5b. Thus, the deflection angle is changed with the position of the beam diameter. More specifically, in the portion near the supersonic wave generator 5b, the laser beam encounters a supersonic wave of high frequency and is considerably deflected, while in the portion distant from the supersonic wave generator 5b the laser beam encounters a supersonic wave of low frequency and is deflected by a small amount. Consequently, the laser beam is not collimated, but converged, and is then deflected as though it had travelled through a cylindrical lens. This is referred to as a so-called cylindrical lens effect.

The laser beam emitted from the acousto-optic deflector 5, which becomes the horizontal scanning laser beam that repeats the deflection scanning, is supplied to a correcting cylindrical lens 6. The correcting cylindrical lens 6 corrects the above-mentioned cylindrical lens effect whereby the laser beam, after it has travelled through the correcting cylindrical lens 6, becomes again a parallel laser beam which repeats the horizontal deflection scanning.

The horizontally deflected laser beam which has travelled through the correcting cylindrical lens 6 is supplied to a vertical scanning acousto-optic deflector 7. The acousto-optic deflector 7 has the same structure as the horizontal scanning acousto-optic deflector 5. More specifically, in the acousto-optic deflector 7, a supersonic wave generator 7b utilising the piezoelectric effect is attached to one surface of an acousto-optic medium 7a and a voltage from a high frequency oscillator 7c is applied to the supersonic wave generator 7b, whereby a progressive wave of supersonic vibration is produced in the acousto-optic medium 7a. Then, the oscillation frequency of the high frequency oscillator 7c is repeatedly swept from a low frequency to a high frequency in a sawtooth wave fashion, thereby causing the incident laser beam to be repeatedly deflected in the vertical direction.

The rate at which the scanning laser beam is repeatedly deflected in the vertical direction is, for example, 60 times per second, which is small as compared with the above-mentioned horizontal deflection. Therefore, the cylindrical lens effect in the acousto-optic deflector 7 can be neglected.

Then, the laser beam emitted from the acousto-optic deflector 7, which is repeatedly deflected in the horizontal and vertical directions in a two-dimensional fashion, is projected through magnifying projection lenses 8 and 9 onto a screen 10. The magnifying projection lenses 8 and 9 are used in order to magnify the picture size to a practical screen size. The picture size on the screen 10 would otherwise be small due to the fact that the deflection angle of the deflector is as small as about 2 degrees.

As described above, the laser beam scans the screen 10 in a so-called raster scanning fashion and a video signal is supplied to the light intensity modulator 3 in synchronism with the horizontal and vertical deflections, thus making it possible to display a television picture.

As compared with a mechanical type laser display apparatus, the laser display apparatus utilising the above-mentioned acousto-optic deflector is free from vibration and noise and is of excellent durability. Further, this type of laser display apparatus is quick to start and is free from time jitter components. Furthermore, the laser display apparatus utilising the acousto-optic deflector is small in size and light in weight as compared with a mechanical type laser display apparatus.

In the acousto-optic deflector 5, the supersonic wave generator 5b is bonded to one surface of the acousto-optic medium 5a to produce a progressive, supersonic wave in the acousto-optic medium 5a, whereby the laser beam incident on the acousto-optic medium 5a is diffracted by the supersonic wave to change the direction in which the laser beam is emitted.

The higher the frequency of the supersonic wave becomes, i.e. the shorter the wavelength of the supersonic wave becomes, the larger the angle of the deflected light becomes. Accordingly, when the laser beam is scanned in a raster-scanning fashion by the acousto-optic deflector 5, the frequency of the supersonic wave must be swept from, for example, a high frequency to a low frequency and vice versa.

Although the sweep width $\Delta f$ of the frequency of the supersonic wave must be increased in order to obtain a large deflection scanning angle, the attenuation of the supersonic wave becomes marked in the high frequency band. Therefore, this technique is not useful in actual practice and has a limit. Generally, the scanning angle is very small, e.g. about 2 degrees. Accordingly, when a picture is displayed by this type of laser display apparatus, this scanning angle must be magnified and projected by using the projection lenses 8 and 9. In that case, the spot size is also magnified in accordance with the magnifying ratio so that the resolution of the picture, i.e. the number N of resolvable beam spots per scanning line, is not related to the magnifying ratio, and is given by:

$$N = \pi D \ \Delta f/2 \ v \cos \theta$$

where D is the spot size of the laser beam, v is the sound velocity at which the supersonic wave propagates in the acousto-optic medium 5a, and $\theta$ is the angle formed by the scanning central angle and the incident laser beam.

Accordingly, in order to obtain a picture of high resolution, i.e. with a high value of N, the spot size of the laser beam incident on the acousto-optic medium 5a must be increased. The substantial disadvantage then arises that, if the spot size of the laser beam is increased, the scanning speed is decreased. This is because it takes a lot of time for the supersonic wave to propagate within the spot size. Assuming that the time necessary for switching the deflection direction is $t$, then the time $t$ is given by:

$$t = \pi D/2 \ v \cos \theta \ .$$

As a result, the time $t$ is increased in proportion to the spot size. That is, high speed scanning and a display of high resolution are contrary to each other.

Consequently, in the laser display apparatus utilising the above-described previously proposed acousto-optic deflector, there is a limit in that only a picture of, for example, the NTSC system, in which the horizontal resolution is 320 lines and the scanning rate is 525 lines/frame, can be displayed. The laser display apparatus utilising the above-described acousto-optic deflector for horizontal scanning cannot be applied to a high definition television receiver system having, for example, 1125 scanning lines.

US Patent No. US-A-4 213 146 discloses (Figure 7) a laser beam deflection apparatus for projecting a laser beam onto a screen or the like, the apparatus comprising: a pair of deflection means for separately deflecting incoming laser beams in a given scan direction; beam switching means for alternately supplying an input laser beam to the pair of deflection means; and projecting means for projecting the deflected laser beams from the pair of deflection means onto the screen or the like. The beam switching means comprises a Pockels cell (polarisation rotator) and a calcite prism, and the pair of deflection means comprises a pair of mirrors.

The present invention provides a laser beam deflection apparatus for projecting a laser beam onto a screen as claimed in Claim 1.

Preferably: the input laser beam is intensity modulated; and means is provided for deflecting a beam or beams outputted from the projection means in a direction generally perpendicular to the given scan direction.

Preferred embodiments of the invention described in detail below provide an improved laser beam deflection apparatus for horizontal scanning which seeks to eliminate or at least alleviate the aforenoted shortcomings and disadvantages encountered with the prior proposals.

More specifically, the preferred laser beam deflection apparatus: generates less noise; is of excellent durability; is small in size and is light in weight; and can horizontally scan a laser beam at high speed.

Embodiments of the invention can suitably be applied to a high definition television system having 1125 scanning lines.

The invention will now be further described, by way of illustrative and non-limiting example, with reference to the accompanying drawings, in which like references are used to identify the same or similar parts in the several figures, and in which:

Figure 1 is a schematic diagram of an example of a previously proposed laser beam deflection apparatus;

Figure 2 is a schematic diagram of a portion of a first laser beam deflection apparatus;

Figures 3A to 3C are waveform diagrams of high frequency voltages used in the apparatus of Figure 2;

Figure 4 is a schematic diagram of a second laser beam deflection apparatus;

Figure 5 is a schematic diagram to which reference is made in explaining the condition of a laser beam in a beam mixing device of the apparatus of Figure 4;

Figure 6 is a schematic diagram of a third laser beam deflection apparatus, the apparatus being an embodiment of the invention; and

Figure 7 is a schematic diagram to which reference is made in explaining the condition of a laser beam in the apparatus of Figure 6.

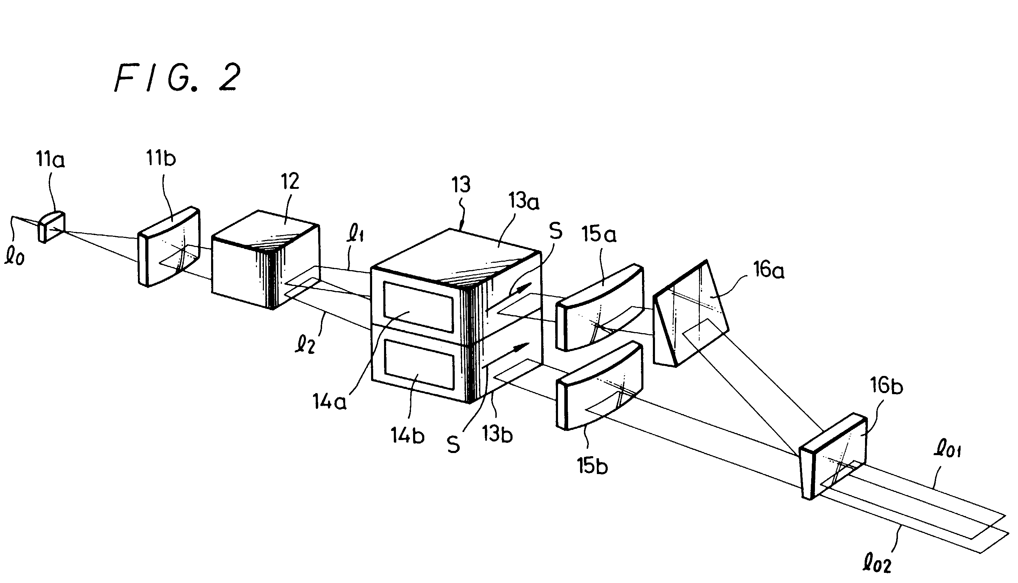

Figure 2 shows a main portion of a first laser beam deflection apparatus. As shown in Figure 2, a laser beam l0, generated by an unshown external source, such as the elements 1 to 3 of Figure 1, has been intensity-modulated in similar manner to the example described with reference to Figure 1. The laser beam l0 is introduced to a cylindrical lens 11a, in which it is magnified in beam width, and is then fed to a cylindrical lens 11b to thereby collimate the beam. Thus, the laser beam is made flat, a cross section thereof being magnified only in the horizontal scanning direction. The flat laser beam is supplied to a beam switching device 12. The beam switching device 12 is formed of an acousto-optic deflector that switches the direction of emission of the incident flat laser beam to an upper or a lower direction in accordance with a switching signal (not shown) applied thereto. The deflection according to which the laser beam is deflected in the upper or lower direction by the beam switching device 12 is not related to the resolution of the projected video image so that the beam size need not be increased in the deflection direction. Accordingly, if the direction of the "thickness" of the incident flat beam is coincident with the direction of travel of the supersonic wave, the switching speed in the direction of emission of the laser beam can be increased sufficiently.

The flat laser beam emitted from the beam switching device 12 is changed to the upper or lower direction in Figure 2 at every horizontal scanning operation, thereby converting the beam l0 to a flat beam l1 or a flat beam l2. The flat beams l1 or l2 are supplied to a horizontal scanning acousto-optic deflector 13. The horizontal scanning acousto-optic deflector 13 is formed of a pair of acousto-optic deflectors 13a and 13b positioned close to one another. Supersonic wave generators 14a and 14b are attached to the acousto-optic deflectors 13a and 13b, and are alternately driven by independent frequency oscillators (not shown), respectively.

More specifically, when the flat beam l1 whose direction of travel has been switched by the beam switching device 12 is supplied to the horizontal scanning acousto-optic deflector 13a, Its horizontal scanning is performed by the supersonic wave generator 14a. On the other hand, when the incident flat beam l1 is supplied to the acousto-optic deflector 13b, its horizontal scanning is performed by the supersonic wave generator 14b. The supersonic waves generated by the supersonic wave generator 14a or 14b travel through the acousto-optic medium in a direction s, as shown in Figure 2, to thereby carry out the deflection scanning in the direction of travel of the supersonic wave. The width direction of the incident flat laser beam l1 or l2 is made coincident with the direction of the horizontal deflection scanning lines s of travel of the supersonic wave, whereby the resolution of the picture displayed on a screen can be sufficiently increased.

The laser beams emitted from the horizontal scanning acousto-optic deflectors 13a and 13b are introduced into cylindrical lenses 15a and 15b, respectively, to thereby correct for the so-called cylindrical lens effect.

The laser beam which has travelled through the cylindrical lens 15a thereafter travels through prisms 16a and 16b, in which the laser beam is deflected to provide a laser beam l01. The light path of this laser beam l01 becomes parallel to that of a laser beam l02 which has passed through the cylindrical lens 15b.

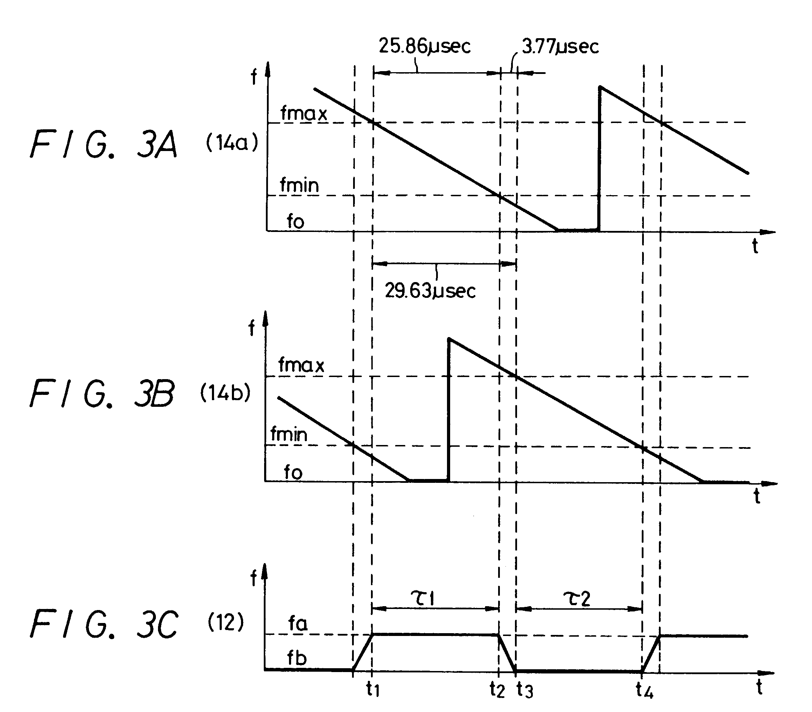

The method by which the beam switching device 12 and the horizontal scanning acousto-optic deflector 13 in the apparatus of Figure 2 are driven by supersonic waves will now be described with reference to Figures 3A to 3C, in which Figure 3A is a waveform diagram of a high frequency voltage applied to the supersonic wave generator 14a of the acousto-optic deflector 13a, Figure 3B is a waveform diagram of a high frequency voltage applied to the supersonic wave generator 14b of the acousto-optic deflector 13b, and Figure 3C is a waveform diagram of a high frequency voltage applied to the beam switching device 12.

When a high frequency voltage of frequency fa shown in Figure 3C is applied to the beam switching device 12 the angle of diffraction of the incident laser beam l0 is increased so that the incident laser beam is emitted in the direction of the light path l1 shown in Figure 2, whereas when a high frequency voltage of frequency fb shown in Figure 3C is applied to the beam switching device 12 the angle of diffraction of the incident laser beam is decreased so that the incident laser beam is emitted in the direction of the light path l2 shown in Figure 2. The frequency of the high frequency voltage is switched between the frequencies fa and fb at every horizontal scanning period $\tau 1$ or $\tau 2$, whereby the direction of emission of the laser beam is switched from l1 to l2 at every horizontal scanning.

Figure 3A illustrates the waveform of the high frequency voltage applied to the supersonic wave generator 14a of the acousto-optic deflector 13a located on the light path l1 of the laser beam. In Figure 3A, fmax and fmin represent upper and lower limits of effective drive frequencies of the acousto-optic deflectors 13a and 13b, wherein the laser beam is deflected within the range of upper and lower limits fmax and fmin. At a point in time t1 at which the frequency of the voltage applied to the beam switching device 12 is switched to the frequency fa, the direction of travel of the laser beam is switched to the light path l1. From the point in time t1, the frequency of the high frequency voltage applied to the supersonic wave generator 14a is linearly decreased from the upper limit value fmax to the lower limit value fmin, that is the scanning ending point. This frequency is continuously decreased down to a frequency f0 after a point in time t2 at which the lower limit value fmin is reached. Then, the frequency of the high frequency voltage applied to the supersonic wave generator 14a is changed in a moment to a predetermined frequency larger than the frequency fmax.

As shown in Figure 3B, from a point in time t3 at which the light path of the laser beam is switched to the light path l2 by the beam switching device 12, a linear sweeping operation is carried out according to which the frequency of the high frequency voltage applied to the supersonic wave generator 14b of the acousto-optic deflector 13b is changed from the upper limit value fmax to the lower limit value fmin.

As described above, the light path is switched at the completion of one horizontal scanning and the laser beam is introduced into another acousto-optic deflector which is in the standby mode after the recursive scanning is ended. Then, the next horizontal scanning is immediately started and this operation is repeated.

In Figures 3A, 3B and 3C, in the case of a high definition video signal having 1125 scanning lines, one horizontal scanning period, $\tau 1$ or $\tau 2$, is about 25.86 microseconds, and a blanking period, i.e. a period between the points in time t2 and t3, is 3.77 microseconds.

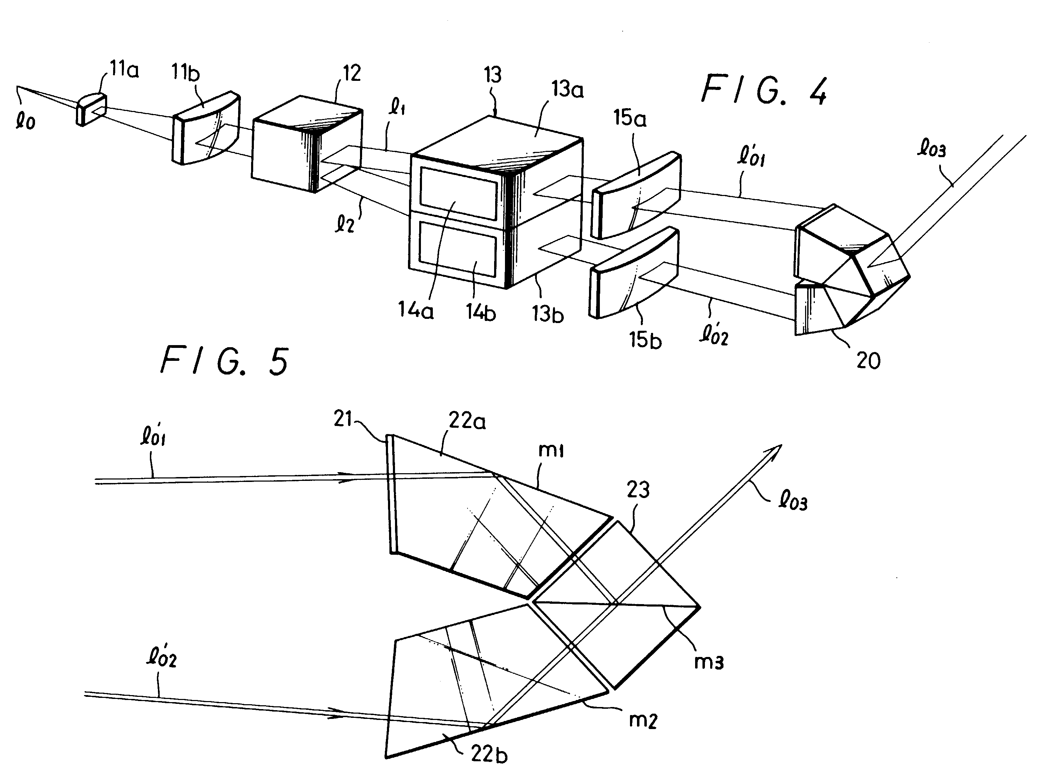

Figure 4 shows a main portion of a second laser beam deflection apparatus. In Figure 4, parts corresponding to parts of the first apparatus (Figure 2) are designated by the same references and their description will not be repeated. The second apparatus (Figure 4) differs from the first apparatus (Figure 2) only in that the prisms 16a and 16b of the first apparatus are replaced by a beam mixing device 20.

With reference to Figure 4, a laser beam l'01 emitted from the horizontal acousto-optic deflector 13a through the cylindrical lens 15a is supplied to the laser beam mixing device 20 and is emitted from the mixing device 20 as a laser beam l03. A laser beam l'02 emitted from the horizontal acousto-optic deflector 13b through the cylindrical lens 15b is also supplied to the laser beam mixing device 20 and is emitted from the mixing device 20 as the laser beam l03.

Figure 5 shows how the laser beam mixing device 20 mixes the laser beams l'01 and l'02 to provide the laser beam l03.

With reference to Figure 5, the laser beam l'01, which has travelled through the cylindrical lens 15a, is passed through a half wave plate 21, in which the polarising plane thereof is rotated by 1/4, and is then fed to a trapezoidal prism 22a. This laser beam is reflected by a reflecting surface m1 of the trapezoidal prism 22a and is fed to a polarising beam splitter 23. The polarising beam splitter 23 is formed by bonding a pair of right-angle prisms via a multi-layered dielectric film m3. The incident laser beam travels through or is reflected by the multi-layered dielectric film m3 in dependence on the polarised condition of the laser beam incident on the multi-layered dielectric film. The laser beam reflected by the reflecting surface m1 is reflected by the dielectric film m3 and is emitted from the polarising beam splitter 23 as the laser beam l03.

The laser beam l'02 which has travelled through the cylindrical lens 15b becomes incident on a trapezoidal prism 22b, in which it is reflected by a reflecting surface m2 of the trapezoidal prism 22b, and is then fed to the polarising beam splitter 23. The laser beam reflected by the reflecting surface m2 travels through the multi-layered dielectric film m3 of the polarising beam splitter 23 and is emitted from the polarising beam splitter 23 as the laser beam l03.

In the second apparatus of Figure 4, if, as shown, the laser beam mixing device 20 is located after the cylindrical lenses 15a and 15b, the laser beams l'01 and l'02 can travel along the same light path after they have travelled through the laser beam mixing device 20. Accordingly, a single laser beam l03 is emitted from the laser beam mixing device 20 as though it had been horizontally scanned at high speed by a single acousto-optic deflector.

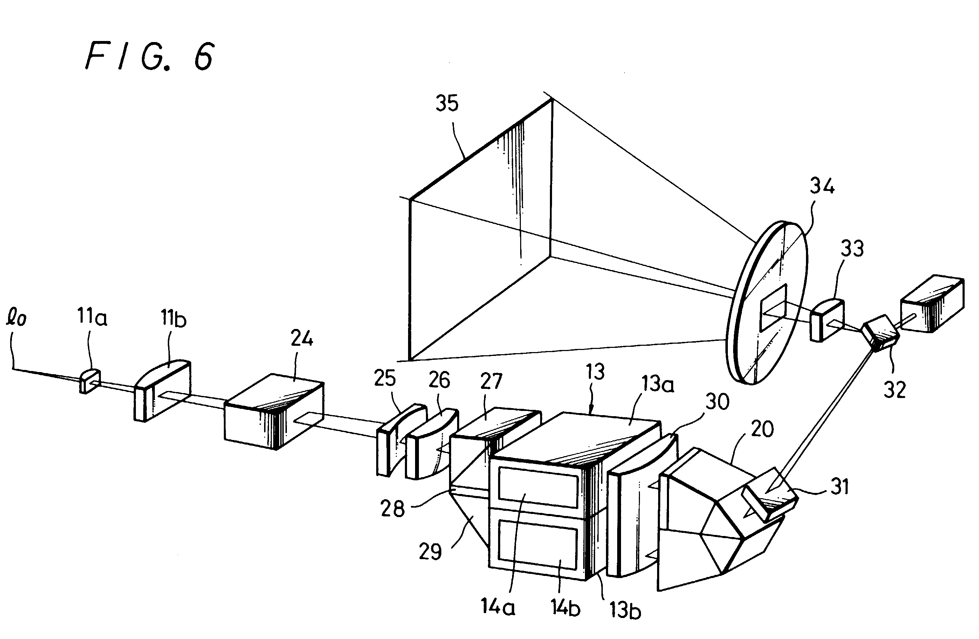

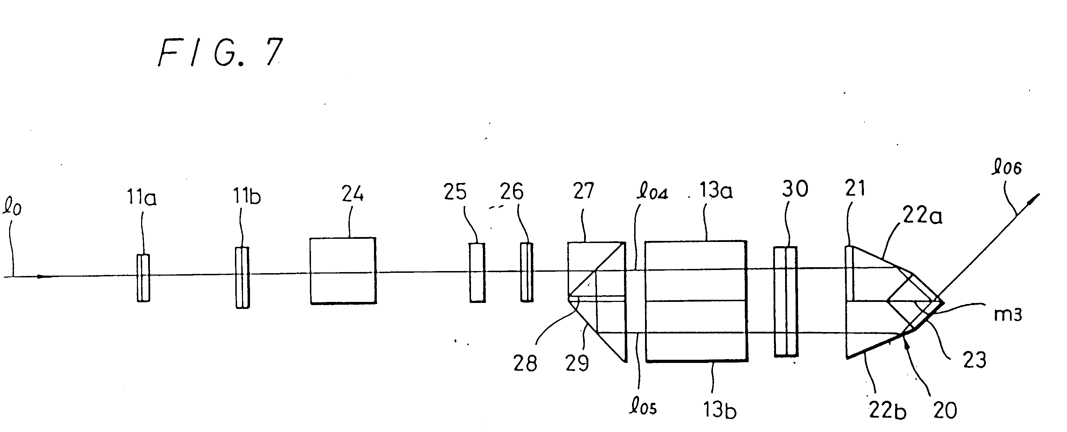

Figure 6 shows a main portion of a third laser beam deflection apparatus, the apparatus being an embodiment of the invention, and Figure 7 is a schematic diagram used to explain the operation of the third apparatus. In Figures 6 and 7, parts corresponding to parts shown in Figures 2 and 4 are designated by the same references and their description will not be repeated.

Referring to Figures 6 and 7, the intensity modulated laser beam l0 is supplied through the cylindrical lenses 11a and 11b to a laser beam mode switching device 24. The laser beam mode switching device 24 is different from the laser beam switching device 12 in the first and second apparatuses (Figures 2 and 4) in that it switches the mode of an incident laser beam to either a parallel wave or a perpendicular wave. The laser beam, whose mode is switched to the parallel wave or the perpendicular wave by the laser beam mode switching device 24, is supplied through cylindrical lenses 25 and 26 to a polarising beam splitter 27.

If the laser beam supplied to the polarising beam splitter 27 is a parallel wave, the laser beam is supplied through the polarising beam splitter 27 to the horizontal acousto-optic deflector 13a as a laser beam l04. If the laser beam supplied to the polarising beam splitter 27 is a perpendicular wave, the laser beam is supplied from the polarising beam splitter 27 to a half wave plate 28, in which it is converted from a perpendicular wave to a parallel wave, and is then fed to a prism 29. The laser beam reflected by the prism 29 is supplied to the horizontal acousto-optic deflector 13b as a laser beam l05.

After the laser beams l04 and l05 are horizontally scanned in the acousto-optic deflectors 13a and 13b, the beams are supplied from the acousto-optic deflectors 13a and 13b to the laser beam mixing device 20 via a cylindrical lens 30. The laser beam incident on the half wave plate 21 of the beam mixing devise 20 is converted to a parallel wave, reflected by the trapezoidal prism 22a, then reflected by the multi-layered dielectric film m3 of the polarising beam splitter 23, and then emitted as a laser beam l06. Further, the laser beam incident on the trapezoidal prism 22b of the laser beam mixing device 20 is reflected by the trapezoidal prism 22b, passed through the dielectric film m3 of the polarising beam splitter 23, and is emitted as the laser beam l06.

As shown in Figure 6, the laser beam l06 is supplied through a cylindrical lens 31 to a galvano mirror 32 for vertical scanning. Then, the laser beam reflected by the galvano mirror 32 is supplied through a cylindrical lens 33 and a projection lens 34 to a screen 35. In this case, the galvano mirror 32 is used to carry out the vertical scanning of the laser beam.

Although no vertical deflection means is shown for the apparatuses of Figures 2 to 5, it will be understood that these apparatuses can use either the acousto-optic deflector 7 shown in Figure 1 or the galvano mirror deflector 32 as shown in Figure 6.

According to the above-described embodiment of the invention, in a laser scanning apparatus utilising two acousto-optic deflectors for horizontal scanning, an intensity modulated laser beam is split into two modes and the split laser beams are alternately and horizontally scanned by the two acousto-optic deflectors, thus making it possible to realise a practical laser scanning apparatus which is low in noise, of excellent durability, small in size, light in weight and which can horizontally scan the laser beam at high speed. Laser scanning apparatus embodying the invention is, for example, suitable for being applied to a laser scanning apparatus of a high definition television system having, for example, 1125 horizontal scanning lines.

Further, the invention is not limited to a laser display apparatus and may be applied to other apparatus such as a laser printer and the like if such apparatus displays a picture by horizontally scanning laser beams.

**Claims**

1. A laser beam deflection apparatus for projecting a laser beam onto a screen, the apparatus comprising:

a pair of deflection means (13a, 13b) for separately deflecting incoming laser beams in a given scan direction; beam switching means (24, 27, 28) for alternately supplying an input laser beam to the pair of deflection means (13a, 13b); and projecting means for projecting the deflected laser beams from the pair of deflection means (13a, 13b) onto the screen; characterised in that: the pair of deflection means (13a, 13b) are acousto-optic deflection means; and the beam switching means (24, 27, 28) comprises a beam mode changer (24) for changing the mode of polarisation of the input laser beam, a polarising beam splitter (27) and a half wave plate (28), said polarising beam splitter (27) being arranged to be supplied with a light output of the beam mode changer (24), for distinguishing between a first and a second mode of polarisation of said laser beam and outputting them as first and second separate laser beams having different modes of polarisation, the beam splitter (27) being arranged such that the first of the separate laser beams is supplied to one (13a) of the pair of acousto-optic deflection means (13a, 13b), and said half wave plate (28) being arranged to be supplied with the second of the separate laser beams from the polarising beam splitter (27), and to output the second separate beam, such that after passing through the half wave plate (28), it is directed to the other (13b) of the pair of acousto-optic deflection means (13a, 13b), whereby the input laser beam is alternately supplied to either one of the acousto-optic deflection means in accordance with a mode of polarisation of the input laser beam as determined by the beam mode changer (24).

2. Apparatus according to claim 1, comprising beam intensity modulation means (3) for modulating the intensity of the laser beam by a video signal prior to the beam reaching the beam switching means (24, 27, 28).

3. Apparatus according to claim 2, wherein the beam intensity modulation means (3) is operative to modulate the laser beam in accordance with video information received from an external source.

4. Apparatus according to claim 1, claim 2 or claim 3, wherein the projecting means includes deflection means (32) for deflecting laser beams outputted by the pair of acousto-optic deflection means (13a, 13b) in a direction generally perpendicular to the given scan direction.

5. Apparatus according to claim 1, claim 2 or claim 3, wherein the projection means includes a beam mixer (20) for mixing together laser beams outputted by the acousto-optic deflection means (13a, 13b) and projecting a single, combined beam.

6. Apparatus according to claim 5, wherein the projecting means includes deflection means (32) for deflecting the laser beam outputted by the beam mixer (20) in a direction generally perpendicular to the given scan direction.

7. Apparatus according to any one of the preceding claims, which includes a laser beam source (1) for generating said input laser beam.

**Patentansprüche**

1. Laserstrahl-Ablenkvorrichtung zum Projizieren eines Laserstrahls auf einen Bildschirm

mit einem Paar von Ablenkmitteln (13a, 13b) zum getrennten Ablenken von ankommenden Laserstrahlen in einer gegebenen Abtastrichtung,
mit einer Strahlschalteinrichtung (24, 27, 28) zum Zuführen eines Eingangs-Laserstrahls abwechselnd an die Ablenkmittel (13a, 13b) des genannten Paares,
sowie mit einer Projektionseinrichtung zum Projizieren der von dem Paar von Ablenkmitteln (13a, 13b) abgelenkten Laserstrahlen auf den Bildschirm,
**dadurch gekennzeichnet**,
daß das Paar von Ablenkmitteln (13a, 13b) aus akusto-optischen Ablenkmitteln besteht und daß die Strahlschalteinrichtung (24, 27, 28) einen Strahlenmodenwandler (24) zum Ändern des Polarisationsmodus des Eingangs-Laserstrahls, einen polarisierenden Strahlenteiler (27) und eine Halbwellenplatte (28) umfaßt, wobei der Strahlenteiler (27) so angeordnet ist, daß ihm aus dem Strahlenmodenwandler (24) austretendes Licht zugeführt wird, um zwischen einem ersten und einem zweiten Polarisationsmodus des Laserstrahls zu unterscheiden und diese als getrennte erste und zweite Laserstrahlen mit unterschiedlichen Polarisationsmoden auszugeben, wobei der Strahlenteiler (27) ferner so angeordnet ist, daß der erste der getrennten Laserstrahlen einem (13a) der akusto-optischen Ablenkmittel (13a, 13b) des genannten Paares zugeführt wird, und wobei die Halbwellenplatte (28) so angeordnet ist, daß ihr der zweite der getrennten Laserstrahlen von dem polarisierenden Strahlenteiler (27) zugeführt wird und sie den zweiten getrennten Strahl so ausgibt, daß er nach dem Durchgang durch die Halbwellenplatte (28) auf das andere (13b) akusto-optische Ablenkmittel (13a, 13b) des genannten Paares gerichtet ist, so daß der Eingangs-Laserstrahl nach Maßgabe des von dem Strahlenmodenwandler (24) bestimmten Polarisationsmodus abwechselnd einem der akusto-optischen Ablenkmittel zugeführt wird.

2. Vorrichtung nach Anspruch 1, mit einer Strahlintensitäts-Modulationseinrichtung (3) zum Modulieren der Intensität des Laserstrahls mit einem Videosignal, bevor der Strahl die Strahlschalteinrichtung (24, 27, 28) erreicht.

3. Vorrichtung nach Anspruch 2, bei der die Strahlintensitäts-Modulationseinrichtung (3) den Laserstrahl nach Maßgabe eines von einer externen Quelle empfangenen Videosignal moduliert.

4. Vorrichtung nach Anspruch 1, 2 oder 3, bei der die Projektionseinrichtung Ablenkmittel (32) aufweist zum Ablenken der von dem Paar von akusto-optischen Ablenkmitteln (13a, 13b) ausgegebenen Laserstrahlen in einer Richtung, die im wesentlichen senkrecht zu der gegebenen Abtastrichtung verläuft.

5. Vorrichtung nach Anspruch 1, 2 oder 3, bei der die Projektionseinrichtung einen Strahlenmischer (20) aufweist zum Zusammenmischen der von den akusto-optischen Ablenkmitteln (13a, 13b) ausgegebenen Laserstrahlen und zum Projizieren eines einzigen kombinierten Strahls.

6. Vorrichtung nach Anspruch 5, bei der die Projektionseinrichtung Ablenkmittel (32) aufweist zum Ablenken des von dem Strahlenmischer (20) ausgegebenen Laserstrahls in einer Richtung, die im wesentlichen senkrecht zu der gegebenen Abtastrichtung verläuft.

7. Vorrichtung nach einem der vorhergehenden Ansprüche mit einer Laserquelle (1) zur Erzeugung des Eingangs-Laserstrahls.

## Revendications

1. Appareil de déviation de faisceau laser pour projeter un faisceau laser sur un écran, l'appareil comprenant :

   une paire de moyens de déviation (13a, 13b) pour dévier séparément des faisceaux laser arrivants suivant une direction de balayage donnée;
   un moyen de commutation de faisceau (24, 27, 28) pour appliquer alternativement un faisceau laser d'entrée sur la paire de moyens de déviation (13a, 13b) ; et
   un moyen de projection pour projeter les faisceaux laser déviés provenant de la paire de moyens de déviation (13a, 13b) sur l'écran, caractérisé en ce que :
   la paire de moyens de déviation (13a, 13b) sont des moyens de déviation acousto-optiques ; et le moyen de commutation de faisceau (24, 27, 28) comprend un dispositif de modification de mode de faisceau (24) pour modifier le mode de polarisation du faisceau laser d'entrée, un séparateur de faisceau de polarisation (27) et une lame demi-onde (28), ledit séparateur de faisceau de polarisation (27) étant agencé de manière à se voir appliquer une sortie de lumière du dispositif de modification de mode de faisceau (24), pour réaliser un distingo entre des premier et second modes de polarisation dudit faisceau laser et pour les émettre en sortie en tant que premier et second faisceaux laser séparés présentant des modes de polarisation différents, le séparateur de faisceau (27) étant agencé de telle sorte que le premier des faisceaux laser séparés soit appliqué sur l'un (13a) de la paire de moyens de déviation acousto-optiques (13a, 13b), et ladite lame demi-onde (28) étant agencée de manière à se voir appliquer le second des faisceaux laser séparés en provenance du séparateur de faisceau de polarisation (27), et pour émettre en sortie le second faisceau séparé de telle sorte qu'après la traversée de la lame demi-onde (28), il soit dirigé sur l'autre (13b) de la paire de moyens de déviation acousto-optiques (13a, 13b) de telle sorte que le faisceau laser d'entrée soit appliqué alternativement sur l'un et l'autre des moyens de déviation acousto-optiques conformément à un mode de polarisation du faisceau laser d'entrée tel que déterminé par le dispositif de modification de mode de faisceau (24).

2. Appareil selon la revendication 1, comprenant un moyen de modulation d'intensité de faisceau (3) pour moduler l'intensité du faisceau laser au moyen d'un signal vidéo avant que le faisceau n'atteigne le moyen de commutation de faisceau (24, 27, 28).

3. Appareil selon la revendication 2, dans lequel le moyen de modulation d'intensité de faisceau (3) fonctionne pour moduler le faisceau laser conformément à une information vidéo reçue depuis une source externe.

4. Appareil selon la revendication 1, 2 ou 3, dans lequel le moyen de projection inclut un moyen de déviation (32) pour dévier des faisceaux laser émis en sortie par la paire de moyens de déviation acousto-optiques (13a, 13b) suivant une direction généralement perpendiculaire à la direction de balayage donnée.

5. Appareil selon la revendication 1, 2 ou 3, dans lequel le moyen de projection inclut un mélangeur de faisceau (20) pour mélanger ensemble les faisceaux laser émis en sortie par les moyens de déviation acousto-optiques (13a, 13b) et pour projeter un unique faisceau combiné.

6. Appareil selon la revendication 5, dans lequel le moyen de projection inclut un moyen de déviation (32) pour dévier le faisceau laser émis en sortie par le mélangeur de faisceau (20) suivant une direction généralement perpendiculaire à la direction de balayage donnée.

7. Appareil selon l'une quelconque des revendications précédentes, lequel inclut une source de faisceau laser (1) pour générer ledit faisceau laser d'entrée.

FIG. 1

FIG. 2

FIG. 3A (14a)

FIG. 3B (14b)

FIG. 3C (12)

EP 0 418 084 B1

FIG. 4

FIG. 5

F I G. 6

## FIG. 7